# EUROPEAN PATENT SPECIFICATION

(11) **EP 2 251 081 B1**
(45) Date of publication and mention of the grant of the patent: **13.09.2017**
(21) Application number: 09715314.2
(22) Date of filing: 17.02.2009
(51) Int. Cl.: B01J 27/24, B01J 37/08, H01M 4/90, H01M 8/10, B01J 37/00, B01J 21/06, H01M 8/1018, B01J 27/22, B01J 35/00

(54) **A membrane electrode assembly, process for preparing the same, and uses of the same**
Membran-Elektroden-Einheit, Verfahren zu deren Herstellung und deren Verwendungen
L'ensemble-membrane-éléctrolyte, procédé pour le produire, et ses utilisations

(30) Priority: 28.02.2008 JP 2008047082
(43) Date of publication of application: 17.11.2010
(73) Proprietor: Showa Denko K.K., Tokyo 105-8518 (JP)
(72) Inventor: SHISHIKURA, Toshikazu, Chiba-shi Chiba 267-0056 (JP); MONDEN, Ryuji, Chiba-shi Chiba 267-0056 (JP); KUROZUMI, Tadatoshi, Chiba-shi Chiba 267-0056 (JP)
(74) Representative: Strehl Schübel-Hopf & Partner
(86) International application number: PCT/JP2009/052696
(87) International publication number: WO 2009/107518

(56) References cited:
- WO-A1-2009/031383
- JP-A- 2006 107 967
- JP-A- 2006 134 603
- JP-A- 2008 108 594
- US-A1- 2004 247 991
- US-A1- 2004 265 648
- US-B1- 6 168 694
- OHGI Y ET AL: "Bubun Sanka shita Sen'i Kinzoku Tanchikkabutsu no Sanso Kangen Shokubaino -Catalytic activity of partially-oxidized transition metal carbonitrides for oxygen reduction reaction", THE ELECTROCHEMICAL SOCIETY OF JAPAN DAI 74 KAI TAIKAI KOEN YOSHISHU,, 29 March 2007 (2007-03-29), page 94, XP008134575,
- 'The Electrochemical Society of Japan Dai 74 Kai Taikai Koen Yoshishu', 29 March 2007, JAPAN article YOSHIRO OSHIRO ET AL.: 'Bubun Sanka shita Sen'i Kinzoku Tanchikkabutsu no Sanso Kangen Shokubaino', page 94, XP008134575

## Description

### TECHNICAL FIELD

The present invention relates to a membrane electrode assembly, a process for preparing the same, and uses of the same.

### BACKGROUND ART

Fuel cells are classified into various types according to the type of electrolyte and the type of electrode, and as typical fuel cells, there are fuel cells of alkali type, phosphoric acid type, molten carbonate type, solid electrolyte type and solid polymer type. Of these, the solid polymer type fuel cells capable of working at a temperature of a low temperature (about -40°C) to about 120°C have been paid attention, and in recent years, development and practical use of them as low pollution power sources for automobiles have been promoted. As uses of the solid polymer type fuel cells, vehicle driving sources or stationary electric sources have been studied, but in order to apply the fuel cells to these uses, durability over a long term is desired.

This polymer solid type fuel cell is a fuel cell of such a type that a polymer solid electrolyte is interposed between an anode and a cathode, a fuel is supplied to the anode, oxygen or air is supplied to the cathode, and oxygen is reduced in the cathode to take out electricity. As the fuel, hydrogen, methanol or the like is mainly used.

In order to raise the reaction rate of the fuel cell to thereby enhance energy conversion efficiency of the fuel cell, a layer containing a catalyst (also referred to as a "catalyst layer for a fuel cell" hereinafter) has been provided on a surface of the cathode (air electrode) or a surface of the anode (fuel electrode) of the fuel cell in the past.

As this catalyst, a precious metal has been generally used, and of precious metals, platinum that is stable at a high potential and has high activity has been mainly used. However, since platinum is high in price and is limited on the resource quantity, development of catalysts capable of substitution has been desired.

Moreover, precious metals used for the cathode surface sometimes dissolve in an acidic atmosphere, and there is a problem that they are not suitable for uses requiring durability over a long term. On this account, development of catalysts which are not corroded in an acidic atmosphere, are excellent in durability and have high oxygen reduction activity has been eagerly desired.

As substitute catalysts for platinum, materials containing nonmetals, such as carbon, nitrogen and boron, have been paid attention in recent years. The materials containing nonmetals are low in price and rich in the resource quantity as compared with precious metals such as platinum.

In a non-patent document 1, it is reported that a ZrOxN compound containing zirconium as a base exhibits oxygen reduction activity.

In a patent document 1, an oxygen reduction electrode material containing a nitride of one or more elements selected from elements of Group 4, Group 5 and Group 14 of the long-form periodic table is disclosed as a substitute material for platinum.

In a patent document 2, it is disclosed that a material which is obtained by partially oxidizing a compound of any one of titanium, lanthanum, tantalum, niobium and zirconium and any one of nitrogen, boron, carbon and sulfur is used for an electrocatalyst for a fuel cell.

In a patent document 3, it is disclosed to use a titanium carbonitride powder as an oxygen electrocatalyst for a solid polymer type fuel cell.

The materials containing these nonmetals, however, are unstable in an acidic solution, and they do not have practically sufficient oxygen reduction activity as catalysts. Therefore, in the practical use of them for fuel cells, their activity is insufficient.

In a patent document 4, an oxycarbonitride obtained by mixing a carbide, an oxide and a nitride and then heat treating the mixture at 500 to 1500°C under vacuum or in an inert or non-oxidizing atmosphere is disclosed.

The oxycarbonitride disclosed in the patent document 4, however, is a thin film magnetic head ceramic substrate material, and it has not been studied to use this oxycarbonitride as a catalyst.

Platinum is useful not only as the above catalyst for a fuel cell but also as a catalyst for exhaust gas treatment or a catalyst for organic synthesis, but platinum is high in price and is limited on the resource quantity, so that development of catalysts capable of substitution has been desired also in these uses.
Patent document 1: Japanese Patent Laid-Open Publication No. 31781/2007
Patent document 2: Japanese Patent Laid-Open Publication No. 198570/2006
Patent document 3: Japanese Patent Laid-Open Publication No. 257888/2007
Patent document 4: Japanese Patent Laid-Open Publication No. 342058/2003
Non-patent document 1: S. Doi, A. Ishihara, S. Mitsushima, N. Kamiya, and K. Ota, Journal of The Electrochemical Society, 154(3) B362-B369 (2007)

Ohgi et al., "Bubun Sanka shita Sen'i Kinzoku Tanchikkabutsu no Sanso Kangen Shokubaino - Catalytic activity of partially-oxidized transition metal carbonitrides of oxygenreduction reaction", THE ELECTROCHEMICAL SOCIETY OF JAPAN DAI 74 KAI TAIKAI KOEN YOSHISHU, 29 March 2007, page 94, XP008134575 disclose an electrode catalyst comprising partially oxidized carbonitride of titanium prepared by a process comprising electrodepositing a mixture of titanium carbonitride and iodine in acetone on a titanium substrate and heating to form an electrodeposited film.

US 2004/0265648 A1 discloses a powder of TiCₓN_{y}O_{z}, wherein 0<x≤1.0, 0<y≤1.0 and 0.1≤z<2.0, which is deposited as a coating in the formation of a cutting tool.

US 2004/0247991 A1 discloses an electrode assembly for fuel cells comprising powdered metal catalyst layers.

US 6,168,694 B1 discloses a catalyst layer of an electrode, the catalyst layer comprising powdered metal and oxygen, nitrogen, carbon and/or boron.

### DISCLOSURE OF THE INVENTION

### PROBLEM TO BE SOLVED BY THE INVENTION

The present invention is intended to solve such problems associated with the prior art as described above, and it is an object of the present invention to provide a catalyst which is not corroded in an acidic electrolyte or at a high potential, is excellent in durability and has high oxygen reduction activity.

### MEANS TO SOLVE THE PROBLEM

In order to solve the above problems associated with the prior art, the present inventors have earnestly studied, and as a result, they have found that a catalyst comprising a specific oxycarbonitride of titanium is not corroded in an acidic electrolyte or at a high potential, is excellent in durability and has high oxygen reduction activity.

Moreover, the present inventors have also found that a catalyst of higher performance is obtained by controlling a ratio of the numbers of atoms in an oxycarbonitride of titanium constituting the catalyst, and they have accomplished the present invention.

The present invention is defined by the claims.

### EFFECT OF THE INVENTION

The catalyst used in the present invention is not corroded in an acidic electrolyte or at a high potential, is stable, has high oxygen reduction activity and is inexpensive as compared with platinum. Therefore, a fuel cell having the catalyst is relatively inexpensive and exhibits excellent performance.

### BRIEF DESCRIPTION OF THE DRAWINGS

Fig. 1 shows an X-ray powder diffraction spectrum of titanium carbonitride of Example 1.
Fig. 2 shows an X-ray powder diffraction spectrum of a catalyst (1) obtained in Example 1.
Fig. 3 shows a graph evaluating oxygen reduction activity of an electrode using a catalyst (1).
Fig. 4 shows an X-ray powder diffraction spectrum of a catalyst (2) obtained in Example 2.
Fig. 5 shows a graph evaluating oxygen reduction activity of an electrode using a catalyst (2).
Fig. 6 shows a graph evaluating oxygen reduction activity of an electrode using a catalyst (3).
Fig. 7 shows an X-ray powder diffraction spectrum of a catalyst (3) obtained in Example 3.
Fig. 8 shows a current-potential curve of an electrode using a catalyst (4).
Fig. 9 shows a graph evaluating oxygen reduction activity of an electrode using a catalyst (4).
Fig. 10 shows an X-ray powder diffraction spectrum of a catalyst (5) obtained in Comparative Example 2.
Fig. 11 shows a graph evaluating oxygen reduction activity of an electrode using a catalyst (5).

### BEST MODE FOR CARRYING OUT THE INVENTION

### Catalyst

The catalyst used in the invention is characterized by comprising an oxycarbonitride of titanium. The oxycarbonitride of titanium is represented by the composition formula TiCₓNyO_{z} (wherein x, y and z represent a ratio of the numbers of atoms and are numbers satisfying the conditions of 0<x≤1.0, 0<y≤1.0, 0.1≤z<2.0, 1.0<x+y+z≤2.0 and 2.0≤4x+3y+2z). In this composition formula, x, y and z are more preferably numbers satisfying the conditions of 0.05≤x≤0.6, 0.005≤y≤0.6, 0.4≤z≤1.945, 1.0≤x+y+z≤2.0 and 3.5≤4x+3y+2z≤4.5. When the ratio of the numbers of atoms satisfies the above ranges, the oxygen reduction activity becomes extremely high, so that such ranges are preferable.

In the present invention, a compound wherein z is less than 0.02 is not regarded as an oxide.

x, y and z represent the numbers of atoms of C, N and O, respectively, in the case where the number of Ti atoms is 1. The value of x+y+z is an indication of a crystal system of a compound consisting of Ti, C, N and O. If TiCₓN_{y}O_{z} has a cubic system, the value of x+y+z is not more than 1.0 and close to 1.0. In TiCₓNyO_{z} for use in the invention, however, the value of x+y+z is larger than 1.0. For example, when most of oxygen is used for the formation of TiO₂, TiCₓN_{y}O_{z} comes to have a mixed system of TiCₓN_{y} having a cubic system and TiO₂ having a tetragonal system. The value of x+y+z varies depending upon the ratio between TiCₓN_{y} and TiO₂. For example, when the ratio between TiC_{0.5}N_{0.5} and TiO₂ is 0.3:0.7, the value of x+y+z becomes 1.7 (x+y+z = 0.3×0.5+0.3×0.5+0.7×2). When the ratio between TiC_{0.5}N_{0.5} and TiO₂ is 1.0:0, the value of x+y+z becomes 1.0. When the ratio between TiC_{0.5}N_{0.5} and TiO₂ is 0:1.0, the value of x+y+z becomes 2.0. That is to say, when TiCₓN_{y}O_{z} has no lattice defect or the like, the value of x+y+z is between 1.0 to 2.0.

From the analytical result of X-ray diffractometry, it has been confirmed that TiCₓN_{y}O_{z} for use in the invention has a rutile structure. However, this rutile structure has been presumed to be a rutile structure wherein a part of O atoms in the crystal lattice are replaced with C and N and there are lattice defects. In general, titanium oxide having a rutile structure containing neither C nor N rarely exhibits oxygen reduction activity. The present inventors have presumed that the reason why TiCₓN_{y}O_{z} has the above structure is as follows.

Inherently, TiC has a cubic system, and TiN also has a cubic system. Since C is tetravalent and N is trivalent, TiCₓN_{y} has a slightly distorted cubic system. When this distorted TiCₓN_{y} is gently oxidized, plural oxygen atoms substitute at holes formed by elimination of a part of N or C atoms in TiCₓN_{y} or around them to thereby form TiCₓN_{y}O_{z} of a rutile structure having lattice defects. As a result, in the thus formed TiCₓN_{y}O_{z} of the rutile structure, unpaired electron density is considered to be increased to thereby enhance oxygen reduction activity. When titanium carbonitride is oxidized, moderate time, moderate temperature and moderate oxygen concentration are necessary, and even if the time is too long or even if the temperature is too high, oxidation proceeds excessively, and the catalytic ability is lowered. That is to say, when titanium carbonitride is oxidized, mild oxidation is necessary, and the mild oxidation can be readily attained by introducing a reducing gas such as hydrogen gas. For example, by merely mixing little distorted TiCₓN_{y} with TiO₂, the resulting catalyst does not have high oxygen reduction activity.

On the other hand, if abrupt oxidation is carried out, TiO₂ of tetragonal crystal or rhombic crystal containing a small amount of oxygen occluded is formed. If such TiO₂ is formed in a large amount, the oxygen reduction activity of the catalyst finally obtained is rapidly lowered. When the amount of oxygen occluded is large, the catalyst has catalytic activity and exerts oxygen reduction activity even if the crystal structure of the catalyst is tetragonal structure. TiCₓN_{y}O_{z} wherein a rock salt structure remains on the surface and the amount of oxygen occluded is small is electrochemically unstable in a strong acid, and it is difficult to use it as a catalyst.

When the valence of Ti of TiCₓN_{y}O_{z} is 2.0, C is usually tetravalent, N is usually trivalent, and O is usually divalent, so that the value of 4x+3y+2z becomes 2.0. It can be thought that the value of 4x+3y+2z being not less than 2.0 means that C, N and O atoms more than usual, particularly O atoms, are bonded. Accordingly, it can be thought that TiCₓN_{y}O_{z} having a 4x+3y+2z value of not less than 2.0 has high unpaired electron density and has high oxygen reduction activity.

An oxygen reduction starting potential of the catalyst for use in the invention, as measured in accordance with the following measuring method (A), is preferably not less than 0.7 V (vs. NHE) based on the reversible hydrogen electrode.

### Measuring method (A)

A catalyst and carbon (electron conductive particles) are placed in a solvent so that the catalyst dispersed in the carbon may become 1% by mass, and they are stirred with ultrasonic waves to obtain a suspension. As the carbon, carbon black (specific surface area: 100 to 300 m²/g) (e.g., XC-72 available from Cabot Corporation) is used, and the catalyst is dispersed so that the mass ratio between the catalyst and carbon may become 95:5. As the solvent, isopropyl alcohol and water (isopropyl alcohol:water = 2:1 by mass) are used.

30 *µ*l of the suspension is withdrawn with applying ultrasonic waves, and the suspension was rapidly dropped on a glassy carbon electrode (diameter: 5.2 mm) and dried at 120°C for 1 hour. By the drying, a catalyst layer for a fuel cell, which contains the catalyst, is formed on the glassy carbon electrode.

Subsequently, 10 *µ*l of a dilute solution obtained by diluting Nafion (DuPont 5% Nafion solution (DE521)) to 10 times with pure water is further dropped on the catalyst layer for a fuel cell, followed by drying at 120°C for 1 hour.

Using the electrode obtained as above, polarization is carried out at a potential scanning rate of 5 mV/sec in a sulfuric acid solution of 0.5 mol/dm³ at a temperature of 30°C in an oxygen atmosphere and in a nitrogen atmosphere to measure a current-potential curve, while a reversible hydrogen electrode in a sulfuric acid solution of the same concentration is used as a reference electrode, and in this measurement, a potential at which a difference of not less than 0. 2 *µ*A/cm² between the reduction current in the oxygen atmosphere and the reduction current in the nitrogen atmosphere starts to appear is regarded as an oxygen reduction starting potential.

If the oxygen reduction starting potential is less than 0.7 V (vs. NHE), hydrogen peroxide is sometimes formed when the above catalyst is used as a catalyst for a cathode of a fuel cell. In order to favorably reduce oxygen, the oxygen reduction starting potential is preferably not less than 0.85 V (vs. NHE). The oxygen reduction starting potential is preferably higher, and there is no upper limit specifically. However, the theoretical upper limit is 1.23 V (vs. NHE).

It is preferable that the catalyst layer for a fuel cell of the invention formed by the use of the above catalyst is used at a potential of not less than 0.4 V (vs. NHE) in an acidic electrolyte. The upper limit of the potential is determined by stability of the electrode, and a potential up to about 1.53 V (vs. NHE) at which oxygen is generated is employable.

If the potential is less than 0.4 V (vs. NHE), oxygen cannot be favorably reduced and usefulness as a catalyst layer of a membrane electrode assembly contained in a fuel cell is poor, though there is no problem from the viewpoint of stability of the oxycarbonitride of titanium.

The flow of a current with which the catalyst used in the invention is used can be evaluated by the oxygen reduction current density (mA/cm²) given when the potential as measured in accordance with the aforesaid measuring method (A) is 0.7V. The oxygen reduction current density is preferably not less than 0.1 (mA/cm²), more preferably not less than 0.5 (mA/cm²). If the oxygen reduction current density is less than 0.1 (mA/cm²), a current does not flow so much, and usefulness as a catalyst layer for a fuel cell is poor.

### Process for preparing catalyst

The process for preparing the catalyst is not specifically restricted, but for example, a preparation process comprising a step of heat treating titanium carbonitride in an inert gas containing oxygen and hydrogen to obtain an oxycarbonitride of titanium can be mentioned.

Examples of processes to obtain titanium carbonitride for use in the above step include (I) a process for preparing titanium carbonitride by heat treating a mixture of an oxide of titanium and carbon in a nitrogen atmosphere, (II) a process for preparing titanium carbonitride by heat treating a mixture of titanium carbide, titanium oxide and titanium nitride in a nitrogen atmosphere or the like, and (III) a process for preparing titanium carbonitride by heat treating a mixture of titanium carbide and titanium nitride in a nitrogen atmosphere or the like.

Moreover, titanium carbonitride may be prepared by the process described in Journal of Solid State Chemistry, 142, 100-107 (1999) (Hak Soo Kim, Guy Bugli, and Gerald Diega-Mariadessou).

### Preparation process (I)

The preparation process (I) is a process for preparing titanium carbonitride by heat treating a mixture of an oxide of titanium and carbon in a nitrogen atmosphere.

The temperature of the heat treatment in the preparation of titanium carbonitride is in the range usually of 600 to 1800°C, preferably 900 to 1600°C. When the heat treatment temperature is in the above range, crystalline properties and homogeneity are excellent, so that such a heat treatment temperature is preferable. If the heat treatment temperature is lower than 600°C, crystalline properties are poor, and homogeneity tends to become poor. If the heat treatment temperature is not lower than 1800°C, titanium carbonitride tends to be sintered.

Examples of the oxides of titanium as the raw materials include TiO, TiO₂ and Ti₂O₃. Even if any of these oxides of titanium is used, a catalyst comprising an oxycarbonitride of titanium obtained by heat treating titanium carbonitride obtained from the oxide in an inert gas containing oxygen gas and hydrogen gas has a high oxygen reduction starting potential and has activity.

Examples of carbons as the raw materials include carbon, carbon black, graphite, graphite, activated carbon, carbon nanotube, carbon nanofiber, carbon nanohorn and fullerene. When the particle diameter of a powder of carbon is decreased, the specific surface area is increased, and the reaction with the oxide is readily carried out, so that a smaller particle diameter is preferable. For example, carbon black (specific surface area: 100 to 300 m²/g, e.g., XC-72 available from Cabot Corporation) or the like is preferably used.

When the molar ratio between the oxide of titanium and carbon as the raw materials is stoichiometrically controlled according to the valence of titanium such as a valence of 2, 3 or 4, proper titanium carbonitride is obtained. In the case of, for example, an oxide of divalent titanium, 1 to 3 mol of carbon is preferable based on 1 mol of the oxide of titanium. In the case of an oxide of tetravalent titanium, 2 to 4 mol of carbon is preferable based on 1 mol of the oxide of titanium. If the molar ratio exceeds the upper limit of the above range, titanium carbide tends to be produced in a large amount, and if the molar ratio is less than the lower limit, titanium nitride tends to be produced in a large amount. In the case of an oxide of divalent titanium, furthermore, 2 to 3 mol of carbon is more preferable based on 1 mol of the oxide of titanium. In the case of an oxide of tetravalent titanium, 3 to 4 mol of carbon is more preferable based on 1 mol of the oxide of titanium. When titanium carbonitride obtained in a mixing ratio satisfying the above range is used, it becomes easy to obtain an oxycarbonitride of titanium (NbCₓN_{y}O_{z}) in which the ratio of the numbers of atoms (x, y, z) and the value of x+y+z satisfy the aforesaid ranges.

### Preparation process (II)

The preparation process (II) is a process for preparing titanium carbonitride by heat treating a mixture of titanium carbide, titanium oxide and titanium nitride in a nitrogen atmosphere or the like.

The temperature of the heat treatment in the preparation of titanium carbonitride is in the range of usually 600 to 1800°C, preferably 800 to 1600°C. When the heat treatment temperature is in the above range, crystalline properties and homogeneity are excellent, so that such a heat treatment temperature is preferable. If the heat treatment temperature is lower than 600°C, crystalline properties are poor, and homogeneity tends to become poor. If the heat treatment temperature is not lower than 1800°C, titanium carbonitride tends to be sintered.

As the raw materials, titanium carbide (TiC), titanium nitride (TiN) and an oxide of titanium are used.

Examples of the oxides of titanium as the raw materials include TiO, TiO₂ and Ti₂O₃. Even if any of these oxides of titanium is used, a catalyst comprising an oxycarbonitride of titanium obtained by heat treating titanium carbonitride obtained from the oxide in an inert gas containing oxygen gas and hydrogen gas has a high oxygen reduction starting potential and has activity.

When the mixing quantities (molar ratio) of titanium carbide (TiC), titanium oxide and titanium nitride (TiN) are controlled, proper titanium carbonitride is obtained. The mixing quantities (molar ratio) are as follows. It is usual that based on 1 mol of titanium nitride (TiN), the quantity of titanium carbide (TiC) is in the range of 0.1 to 500 mol and the quantity of titanium oxide is in the range of 0.01 to 50 mol, and it is preferable that based on 1 mol of titanium nitride (TiN), the quantity of titanium carbide (TiC) is in the range of 1 to 300 mol and the quantity of titanium oxide is in the range of 0.1 to 30 mol. When titanium carbonitride prepared in a mixing ratio satisfying the above ranges is used, it becomes easy to obtain an oxycarbonitride of titanium (TiCₓN_{y}O_{z}) in which the ratio of the numbers of atoms (x, y, z) and the value of x+y+z satisfy the aforesaid ranges.

### Preparation process (III)

The preparation process (III) is a process for preparing titanium carbonitride by heat treating a mixture of titanium carbide and titanium nitride in a nitrogen atmosphere or the like.

The temperature of the heat treatment in the preparation of titanium carbonitride is in the range of 600 to 1800°C, preferably 800 to 1600°C. When the heat treatment temperature is in the above range, crystalline properties and homogeneity are excellent, so that such a heat treatment temperature is preferable. If the heat treatment temperature is lower than 600°C, crystalline properties are poor, and homogeneity tends to become poor. If the heat treatment temperature is not lower than 1800°C, titanium carbonitride tends to be sintered.

As the raw materials, titanium carbide (TiC) and titanium nitride (TiN) are used. When the mixing quantities (molar ratio) of titanium carbide and titanium nitride are controlled, proper titanium carbonitride is obtained. The mixing quantities (molar ratio) are as follows. It is usual that based on 1 mol of titanium carbide (TiC), the quantity of titanium nitride (TiN) is in the range of 0.01 to 10 mol, and it is preferable that based on 1 mol of titanium carbide (TiC), the quantity of titanium nitride (TiN) is in the range of 0.1 to 10 mol. When titanium carbonitride prepared in a mixing ratio satisfying the above ranges is used, it becomes easy to obtain an oxycarbonitride of titanium (TiCₓN_{y}O_{z}) in which the ratio of the numbers of atoms (x, y, z) and the value of x+y+z satisfy the aforesaid ranges. A catalyst comprising such an oxycarbonitride of titanium (TiCₓN_{y}O_{z}) has a high oxygen reduction starting potential and has high activity.

### Step for preparing oxycarbonitride of titanium

Next, a step of heat treating titanium carbonitride in an inert gas containing oxygen gas and hydrogen gas to obtain an oxycarbonitride of titanium is described.

Examples of the inert gases include helium gas, neon gas, argon gas, krypton gas, xenon gas, radon gas and nitrogen gas. From the viewpoints of relatively easy availability, argon gas, helium gas or nitrogen gas is particularly preferable.

Although the oxygen gas concentration in this step depends upon the heat treatment time and the heat treatment temperature, it is in the range of preferably 0.1 to 10% by volume, particularly preferably 0.5 to 5% by volume. When the oxygen gas concentration is in the above range, a homogeneous oxycarbonitride is formed, so that such an oxygen gas concentration is preferable. If the oxygen gas concentration is less than 0.1% by volume, titanium carbonitide tends to be in an unoxidized state. If the oxygen gas concentration exceeds 10% by volume, oxidation tends to proceed excessively.

In order to carry out oxidation reaction gently to efficiently prepare TiCₓN_{y}O_{z} containing a large amount of oxygen occluded, it is preferable to incorporate hydrogen gas as a reducing gas in advance into the inert gas. When oxidation is carried out in a reducing atmosphere such as hydrogen gas, an oxycarbonitride having many oxygen defects tends to be obtained. Therefore, it can be presumed that an oxycarbonitride of titanium obtained by heat treating titanium carbonitride in an inert gas containing not only oxygen gas but also hydrogen gas is enhanced in electrical conductivity and has high oxygen reduction activity.

Although the hydrogen gas concentration is not specifically restricted, it is preferably about 2 times the oxygen gas concentration in the inert gas. That is to say, the amount of oxygen is in the range of 0.1% by volume to 10% by volume, so that the amount of hydrogen is in the range of preferably 0.2% by volume to 20% by volume. However, if the oxygen gas concentration and the hydrogen gas concentration are too high, there is danger of explosion, so that the oxygen gas concentration is in the range of more preferably 0.5% by volume to 3% by volume, and the hydrogen gas concentration is in the range of more preferably 1% by volume to 6% by volume.

The temperature of the heat treatment in this step is in the range of usually 400 to 1400°C, preferably 600 to 1200°C. When the heat treatment temperature is in the above range, a homogeneous oxycarbonitride is formed, so that such a heat treatment temperature is preferable. If the heat treatment temperature is lower than 400°C, there is a tendency for oxidation not to proceed. If the heat treatment temperature is not lower than 1400°C, oxidation proceeds excessively, and grain growth tends to take place.

Examples of heat treatment methods in this step include static method, stirring method, dropping method and powder trapping method.

The dropping method is a method comprising heating an induction furnace to a given heat treatment temperature with flowing an inert gas containing slight amounts of oxygen gas and hydrogen gas into the furnace, keeping thermal equilibrium at the temperature, then dropping titanium carbonitride into a crucible that is a heating zone of the furnace and carrying out heat treatment. The dropping method is preferable from the viewpoint that aggregation and growth of titanium carbonitride grains can be reduced to the minimum.

The powder trapping method is a method comprising allowing sprayed titanium carbonitride to float in an inert gas atmosphere containing slight amounts of oxygen gas and hydrogen gas, trapping the titanium carbonitride in a vertical tube furnace maintained at a given heat treatment temperature and carrying out heat treatment.

In the case of the dropping method, the heat treatment time of titanium carbonitride is in the range of usually 0. 5 to 10 minutes, preferably 0. 5 to 3minutes. When the heat treatment time is in the above range, a homogeneous oxycarbonitride tends to be formed, so that such a heat treatment time is preferable. If the heat treatment time is less than 0.5 minute, an oxycarbonitride tends to be partially formed, and if the heat treatment time exceeds 10 minutes, oxidation tends to proceed excessively.

In the case of the powder trapping method, the heat treatment time of titanium carbonitride is in the range of 0.2 second to 1 minute, preferably 0.2 to 10 seconds. When the heat treatment time is in the above range, a homogeneous oxycarbonitride tends to be formed, so that such a heat treatment time is preferable. If the heat treatment time is less than 0.2 second, an oxycarbonitride tends to be partially formed, and if the heat treatment time exceeds 1 minute, oxidation tends to proceed excessively.

When the heat treatment is carried out in a tube furnace, the heat treatment time of titanium carbonitride is in the range of usually 0.1 to 20 hours, preferably 0.5 hour to 10 hours. When the heat treatment time is in the above range, a homogeneous oxycarbonitride tends to be formed, so that such a heat treatment time is preferable. If the heat treatment time is less than 0.1 hour, an oxycarbonitride tends to be partially formed, and if the heat treatment time exceeds 20 hours, oxidation tends to proceed excessively.

As the catalyst of the invention, the oxycarbonitride of titanium obtained by the above preparation process or the like may be used as it is, but a more finely divided powder obtained by further crushing the resulting oxycarbonitride of titanium may be used.

Examples of methods to crush the oxycarbonitride of titanium include methods using a roll rolling mill, a ball mill, a medium stirring mill, an air flow crusher, a mortar and a bath crushing machine. From the viewpoint that the oxycarbonitride of titanium can be formed into finer particles, the method using an air flow crusher is preferable, and from the viewpoint that treatment of small quantities can be easily carried out, the method using a mortar is preferable.

### Use application

The catalyst described in the invention can be used as a substitute catalyst for a platinum catalyst.

For example, the catalyst of the invention can be used as a catalyst for a fuel cell, a catalyst for exhaust gas treatment or a catalyst for organic synthesis.

The catalyst layer for a fuel cell used in the invention is characterized by containing the above catalyst.

As the catalyst layer for a fuel cell, there is an anode catalyst layer or a cathode catalyst layer, and the above catalyst can be used for any of these layers. Since the catalyst is excellent in durability and has high oxygen reduction activity, it is preferably used for the cathode catalyst layer.

The catalyst layer for a fuel cell used in the invention preferably further contains electron conductive particles. When the catalyst layer for a fuel cell, which contains the above catalyst, further contains electron conductive particles, the reduction current canbemore enhanced. It is thought that electric contacts for inducing electrochemical reaction are formed in the catalyst by virtue of the electron conductive particles and therefore reduction current is enhanced.

The electron conductive particles are usually used as carriers of the catalyst.

Examples of materials to form the electron conductive particles include carbon, conductive polymers, conductive ceramics, metals, and conductive inorganic oxides such as tungsten oxide and iridium oxide. These materials can be used singly or in combination. In particular, carbon particles having a large specific surface area alone or a mixture of carbon particles having a large specific surface area and other electron conductive particles is preferable. That is to say, the catalyst layer for a fuel cell preferably contains the catalyst and carbon particles having a large specific surface area.

As the carbon, carbon black, graphite, graphite, activated carbon, carbon nanotube, carbon nanofiber, carbon nanohorn, fullerene or the like is employable. If the particle diameter of carbon is too small, an electron conduction path is hardly formed. If the particle diameter thereof is too large, gas diffusion property of the catalyst layer for a fuel cell tends to be lowered or utilization of the catalyst tends to be lowered. Therefore, the particle diameter of carbon is in the range of preferably 10 to 1000 nm, more preferably 10 to 100 nm.

When the material to form the electron conductive particles is carbon, the mass ratio between the catalyst and the carbon (catalyst:carbon) is in the range of preferably 4:1 to 1000:1.

The conductive polymer is not specifically restricted, and examples thereof include polyacetylene, poly-p-phenylene, polyaniline, polyalkylaniline, polypyrrole, polythiophene, polyindole, poly-1,5-diaminoanthraquinone, polyaminodiphenyl, poly(o-phenylenediamine), poly(quinolinium) salt, polypyridine, polyquinoxaline and polyphenylquinoxaline. Of these, polypyrrole, polyaniline and polythiophene are preferable, and polypyrrole is more preferable.

The polymer electrolyte is not specifically restricted as long as it is generally used in a catalyst layer for a fuel cell. Examples of the polymer electrolytes include a perfluorocarbon polymer having a sulfonic acid group (e.g., Nafion (DuPont 5% Nafion solution (DE521) or the like), a hydrocarbon-based polymer compound having a sulfonic acid group, a polymer compound doped with an inorganic acid such as phosphoric acid, an organic/inorganic hybrid polymer partially substituted with a proton conductive functional group, and a proton conductor wherein polymer matrix is impregnated with a phosphoric acid solution or a sulfuric acid solution. Of these, Nafion (DuPont 5% Nafion solution (DE521)) is preferably used.

The catalyst layer for a fuel cell used in the invention can be used as any of an anode catalyst layer and a cathode catalyst layer. Since the catalyst layer for a fuel cell used in the invention contains a catalyst which has high oxygen reduction activity and is hardly corroded even at a high potential in an acidic electrolyte, it is useful as a catalyst layer (catalyst layer for cathode) provided in a cathode of a fuel cell. The catalyst layer for a fuel cell used in the invention is particularly preferably used as a catalyst layer provided in a cathode of a membrane electrode assembly that is provided in a solid polymer type fuel cell.

Examples of methods to disperse the catalyst onto the electron conductive particles that are carriers include a method of air flow dispersing and a method of dispersing in liquid medium. The method of dispersing in liquid medium is preferable because a dispersion obtained by dispersing the catalyst and the electron conductive particles in a solvent can be used in the step of forming a catalyst layer for a fuel cell. As the method of dispersing in liquid medium, a method using an orifice contraction flow, a method using a rotary shear flow, a method using ultrasonic waves, or the like can be mentioned. The solvent used in the method of dispersing in liquid medium is not specifically restricted as long as the catalyst and the electron conductive particles are not corroded by the solvent and they can be dispersed in the solvent. In general, a volatile liquid organic solvent, water or the like is used.

When the catalyst is dispersed onto the electron conductive particles, the above electrolyte and a dispersing agent may be further dispersed at the same time.

The method to form the catalyst layer for a fuel cell is not specifically restricted, and for example, a method comprising coating the later-described electrolytic membrane or gas diffusion layer with a suspension containing the catalyst, the electron conductive particles and the electrolyte can be mentioned. Examples of coating methods include dipping, screen printing, roll coating and spraying. A method comprising forming a catalyst layer for a fuel cell on a substrate by coating method or filtration method using the suspension containing the catalyst, the electron conductive particles and the electrolyte and then forming a catalyst layer for a fuel cell on the electrolytic membrane by transfer method can be also mentioned.

The electrode used in the invention is characterized by having the above-mentioned catalyst layer for a fuel cell and a porous support layer.

The electrode used in the invention can be used as any electrode of a cathode and an anode. Since the electrode of the invention is excellent in durability and has high catalytic ability, it exerts higher effect when it is used as a cathode.

In the constitution of a fuel cell, by providing a gas diffusion layer between an electrocatalyst and a collector that is present outside a structure (membrane electrode assembly) wherein a solid electrolyte is interposed between an anode and a cathode, diffusion properties of a fuel and an oxidizing gas are designed to be enhanced to thereby enhance efficiency of the fuel cell. For the gas diffusion layer, carbon-based porous materials, such as carbon paper and carbon cloth, are generally used, and for the purpose of weight lightening, an aluminum foil coated with stainless steel or an anti-corrosion material is generally used.

The membrane electrode assembly of the invention is a membrane electrode assembly having a cathode, an anode and an electrolytic membrane arranged between the cathode and the anode, and is characterized in that the cathode and/or the anode is the aforesaid electrode.

As the electrolytic membrane, for example, an electrolytic membrane using a perfluorosulfonic acid-based substance or a hydrocarbon-based electrolytic membrane is generally used. However, a membrane obtained by impregnating a microporous polymer membrane with a liquid electrolyte or a membrane obtained by filling a porous body with a polymer electrolyte may be used.

The fuel cell of the invention is characterized by having the above-mentioned membrane electrode assembly.

Electrode reaction of the fuel cell takes place on a so-called 3-phase interface (electrolyte- electrocatalyst -reaction gas). Fuel cells are classified into several types according to difference in electrolyte used, etc. , and there are molten carbonate type (MCFC), phosphoric acid type (PAFC), solid oxide type (SOFC), polymer electrolyte type (PEFC), etc. The catalyst of the invention can be used as a substitute for platinum, so that it can be used irrespective of the type of the fuel cell, but when it is used for the solid polymer type fuel cell among them, a much higher effect can be obtained.

### EXAMPLES

The present invention is further described with reference to the following examples, but it should be construed that the invention is in no way limited to those examples.

Various measurements in the examples and the comparative examples were carried out by the following methods.

### 1. X-Ray powder diffraction

Using Rotaflex manufactured by Rigaku Denki Co., Ltd., X-ray powder diffraction of a sample was carried out.

### 2. Elemental analysis

Carbon: About 0.1 g of a sample was weighed out and subjected to measurement with EMIA-110 manufactured by Horiba, Ltd.

Nitrogen, oxygen: About 0.1 g of a sample was weighed out, enclosed in Ni-Cup and subjected to measurement with an ON analytical device.

Titanium: About 0.1 g of a sample was weighed into a platinum dish, and to the sample was added nitric acid-hydrofluoric acid, followed by thermal decomposition. The thermal decomposition product was subjected to volumetric measurement, then diluted and determined by ICP-MS.

### Example 1

### 1. Preparation of catalyst

5.10 g (85 mmol) of titanium carbide (TiC), 0.80 g (10 mmol) of titanium oxide (TiO₂) and 0.31 g (5 mmol) of titanium nitride (TiN) were well mixed and heated at 1800 °C for 3 hours in a nitrogen atmosphere to obtain 5.73 g of titanium carbonitride. Since the resulting titanium carbonitride became a sintered body, it was crushed by an automatic mortar.

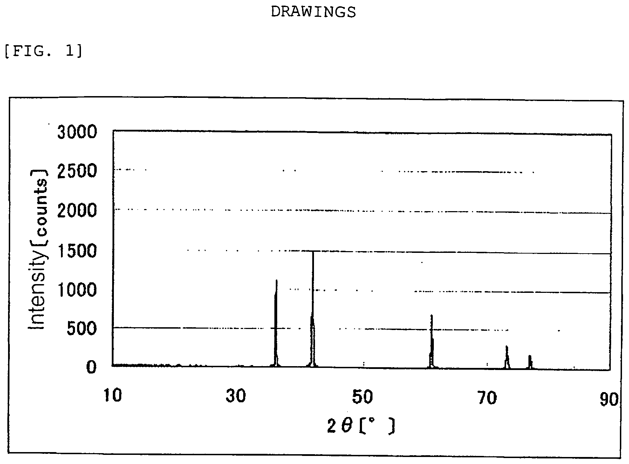

An X-ray powder diffraction spectrum of the resulting titanium carbonitride is shown in Fig. 1.

The results of elemental analysis of the resulting titanium carbonitride are set forth in Table 1.

In a tube furnace, 298 mg of the resulting titanium carbonitride was heated at 1000 °C for 10 hours with flowing nitrogen gas containing 1% by volume of oxygen gas and 4% by volume of hydrogen gas, whereby 393 mg of an oxycarbonitride of titanium (also referred to as a "catalyst (1)" hereinafter) was obtained.

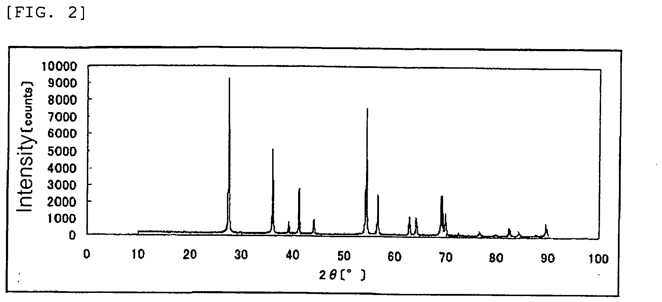

An X-ray powder diffraction spectrum of the resulting catalyst (1) is shown in Fig. 2.

The results of elemental analysis of the catalyst (1) are set forth in Table 1.

### 2. Preparation of electrode for fuel cell

Measurement of oxygen reduction activity was carried out in the following manner. 95 mg of the catalyst (1) and 5 mg of carbon (XC-72 available from Cabot Corporation) were introduced into 10 g of a mixed solution of isopropyl alcohol and pure water (isopropyl alcohol: pure water = 2:1, by mass), and they were mixed by stirring and suspending with ultrasonic waves. Then, 30 *µ*l of the mixture was applied to a glassy carbon electrode (available from Tokai Carbon Co., Ltd. , diameter: 5. 2 mm) and dried at 120°C for 1 hour. Moreover, 10 *µ*l of a dilute solution obtained by diluting Nafion (DuPont 5% Nafion solution (DE521)) to 10 times with pure water was applied and dried at 120°C for 1 hour to obtain an electrode (1) for a fuel cell.

### 3. Evaluation of oxygen reduction activity

Catalytic ability (oxygen reduction activity) of the electrode (1) for a fuel cell prepared as above was evaluated in the following manner.

First, the electrode (1) for a fuel cell prepared was subjected to polarization at a potential scanning rate of 5 mV/sec in a sulfuric acid solution of 0.5mol/dm³ at 30 °C in an oxygen atmosphere and in a nitrogen atmosphere, to measure a current-potential curve. In this measurement, a reversible hydrogen electrode in a sulfuric acid solution of the same concentration was used as a reference electrode.

From the result of the above measurement, a potential at which a difference of not less than 0.2 *µ*A/cm² between the reduction current in the oxygen atmosphere and the reduction current in the nitrogen atmosphere started to appear was regarded as an oxygen reduction starting potential, and the difference between them was regarded as an oxygen reduction current.

The catalytic ability (oxygen reduction activity) of the electrode (1) for a fuel cell prepared was evaluated by the oxygen reduction starting potential and the oxygen reduction current.

That is to say, a higher oxygen reduction starting potential or a higher oxygen reduction current indicates that the catalytic ability (oxygen reduction activity) of the electrode (1) for a fuel cell is higher.

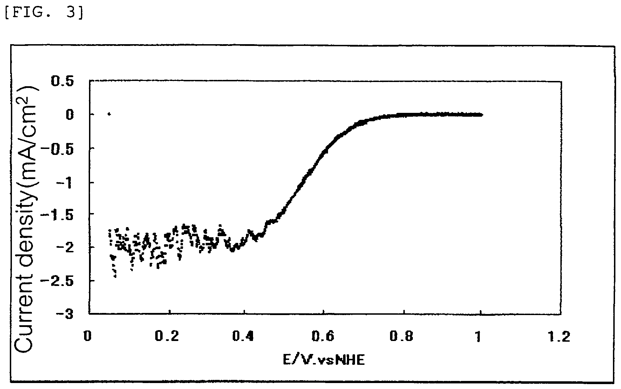

The result of examination of the oxygen reduction activity of the electrode using the catalyst (1) is shown in Fig. 3.

This electrode had an oxygen reduction starting potential of 0. 85 V (vs. NHE), and it proved to have high oxygen reduction activity.

### Example 2

### 1. Preparation of catalyst

In a tube furnace, 314 mg of titanium carbonitride obtained in Example 1 was heated at 1000 °C for 3 hours with flowing nitrogen gas containing 1.5% by volume of oxygen gas and 4% by volume of hydrogen gas, whereby 411 mg of an oxycarbonitride of titanium (also referred to as a "catalyst (2)" hereinafter) was obtained.

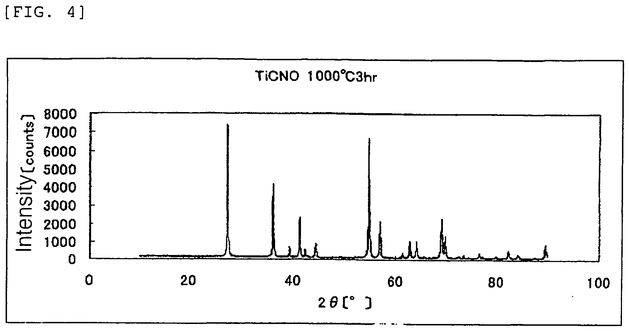

An X-ray powder diffraction spectrum of the resulting catalyst (2) is shown in Fig. 4.

The results of elemental analysis of the catalyst (2) are set forth in Table 1.

### 2. Preparation of electrode for fuel cell

An electrode (2) for a fuel cell was obtained in the same manner as in Example 1, except that the catalyst (2) was used.

### 3. Evaluation of oxygen reduction activity

Catalytic ability (oxygen reduction activity) was evaluated in the same manner as in Example 1, except that the electrode (2) for a fuel cell was used.

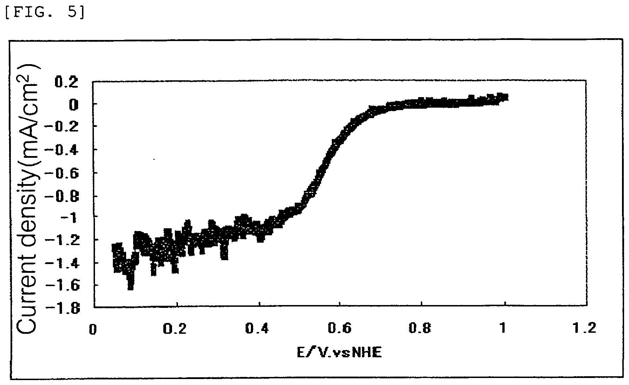

A current-potential curve obtained in this measurement is shown in Fig. 5.

The electrode (2) for a fuel cell prepared in Example 2 had an oxygen reduction starting potential of 0.83 V (vs. NHE), and it proved to have high oxygen reduction activity.

### Example 3

### 1. Preparation of catalyst

In a tube furnace, 314 mg of titanium carbonitride obtained in Example 1 was heated at 1000°C for 3 hours with flowing nitrogen gas containing 1.0% by volume of oxygen gas and 1.3% by volume of hydrogen gas, whereby 415 mg of an oxycarbonitride of titanium (also referred to as a "catalyst (3)" hereinafter) was obtained.

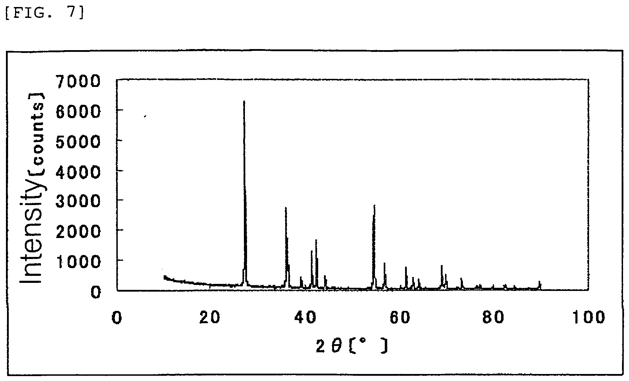

An X-ray powder diffraction spectrum of the resulting catalyst (3) is shown in Fig. 7.

The results of elemental analysis of the catalyst (3) are set forth in Table 1.

### 2. Preparation of electrode for fuel cell

An electrode (3) for a fuel cell was obtained in the same manner as in Example 1, except that the catalyst (3) was used.

### 3. Evaluation of oxygen reduction activity

Catalytic ability (oxygen reduction activity) was evaluated in the same manner as in Example 1, except that the electrode (3) for a fuel cell was used.

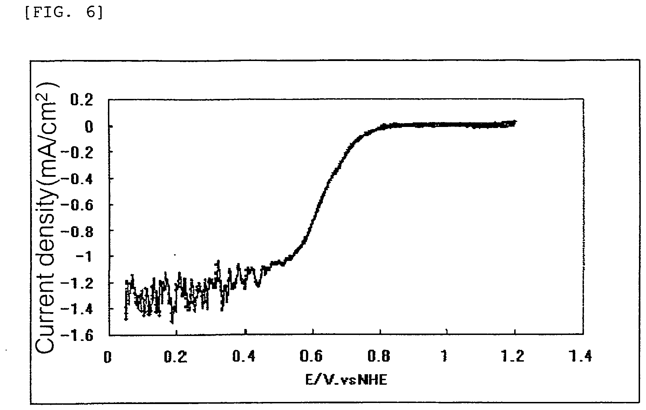

A current-potential curve obtained in this measurement is shown in Fig. 6.

The electrode (3) for a fuel cell prepared in Example 3 had an oxygen reduction starting potential of 0.90 V (vs. NHE), and it proved to have high oxygen reduction activity.

### Comparative Example 1

### 1. Preparation of catalyst

Titanium carbonitride obtained in Example 1 was used as a catalyst (also referred to as a "catalyst (4)" hereinafter).

### 2. Preparation of electrode for fuel cell

An electrode (4) for a fuel cell was obtained in the same manner as in Example 1, except that the catalyst (4) was used.

### 3. Evaluation of oxygen reduction activity

Catalytic ability (oxygen reduction activity) was evaluated in the same manner as in Example 1, except that the electrode (4) for a fuel cell was used.

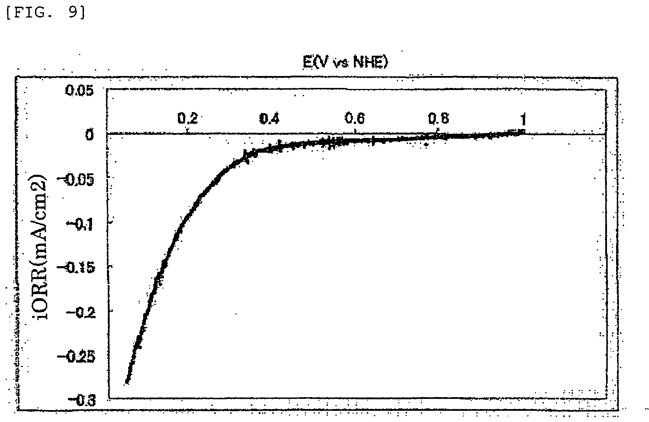

A current-potential curve obtained in this measurement is shown in Fig. 9.

The electrode (4) for a fuel cell prepared in Comparative Example 1 had an oxygen reduction starting potential of 0.6 V (vs. NHE).

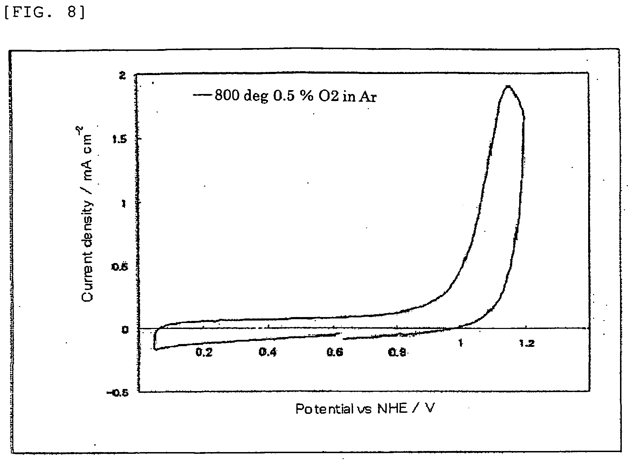

Fig. 8 shows a current-potential curve obtained by allowing the potential to stand in a state of open-circuit potential for several hours after the examination of the current-potential curve of Fig. 9, then sweeping the potential to 0.05 V in the direction of reduction, then turning back the potential to sweep it to 1.15 V in the direction of oxidation and returning the potential to the original open-circuit potential. In the case of the electrode for a fuel cell prepared in Comparative Example 1, it was found from Fig. 8 that when potential scan to the anode side was carried out, an electrode dissolution current flows from the vicinity of 1 V (vs. NHE), and the corrosion resistance of the electrode was poor.

### Comparative Example 2

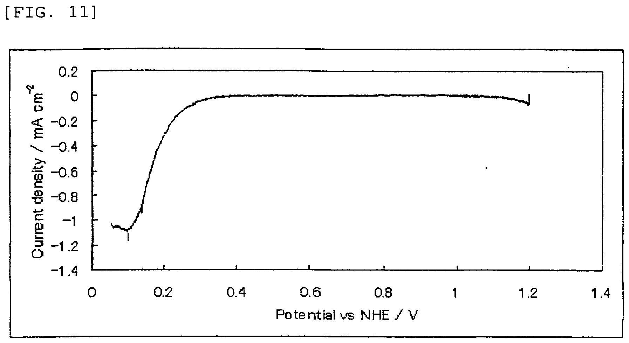

An electrode (5) for a fuel cell was prepared in the same manner as in Example 1, except that commercially available rutile titanium dioxide (TiO₂) (available fromCabot Corporation) was usedas a catalyst (5), and the oxygen reduction activity of the electrode (5) for a fuel cell was evaluated. In Fig. 11, a current-potential curve obtained in this measurement is shown.

The electrode (5) for a fuel cell prepared in Comparative Example 2 had an oxygen reduction starting potential of 0.45 V (vs. NHE), and it scarcely had reduction ability.

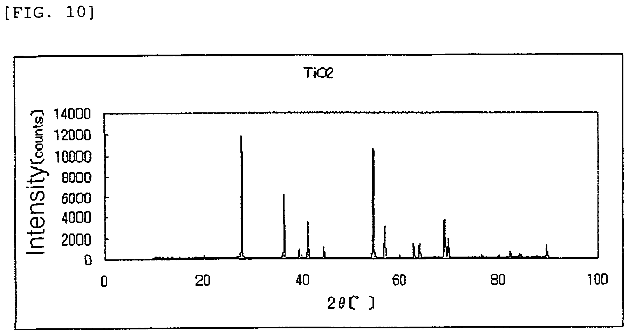

An X-ray powder diffraction spectrum of the catalyst (5) is shown in Fig. 10. The catalyst had a crystal form of rutile type.
[Table 1]

**Table 1**

| | C (wt%) | N (wt%) | O (wt%) | Ti (wt%) | Composition |
|---|---|---|---|---|---|
| Ex. 1 Carbonitride | 9.65 | 12 | 0.07 | 78.28 | TiC_{0.49}N_{0.52}O_{0.01} |
| Ex. 1 Oxycarbonitride | 1.46 | 0.25 | 37.6 | 60.7 | TiC_{0.10}N_{0.01}O_{1.85} |
| Ex. 2 Oxycarbonitride | 2.03 | 0.62 | 35.88 | 61.47 | TiC_{0.13}N_{0.03}O_{1.75} |
| Ex. 3 Oxycarbonitride | 1.85 | 0.37 | 36.8 | 61 | TiC_{0.12}N_{0.02}O_{1.80} |

### INDUSTRIAL APPLICABILITY

Since the catalyst used in the invention is not corroded in an acidic electrolyte or at a high potential, is excellent in durability and has high oxygen reduction activity, it is used in the catalyst layer of the membrane electrode assembly according to the present invention.

## Claims

1. A membrane electrode assembly having a cathode, an anode and an electrolytic membrane arranged between the cathode and the anode,
wherein the cathode and/or the anode is an electrode having
a catalyst layer containing a powder catalyst comprising an oxycarbonitride of titanium and
a porous support layer, and
wherein the oxycarbonitride of titanium is represented by the composition formula TiCₓN_{y}O_{z} (wherein x, y and z represent a ratio of the numbers of atoms and are numbers satisfying the conditions of 0<x≤1.0, 0<y≤1.0, 0.1≤z<2.0, 1.0<x+y+z≤2.0 and 2.0≤4x+3y+2z).

2. The membrane electrode assembly as claimed in claim 1, wherein the catalyst layer further contains electron conductive particles.

3. A process of preparing the membrane electrode assembly as claimed in claim 1 or 2, which comprises
(a) a step of preparing titanium carbonitride
by (i) heat treating a mixture of an oxide of titanium and carbon in a nitrogen atmosphere, wherein
when the oxide of titanium is an oxide of divalent titanium, the quantity of carbon is in the range of 1 to 3 mol based on 1 mol of the oxide of titanium and
when the oxide of titanium is an oxide of tetravalent titanium, the quantity of carbon is in the range of 2 to 4 mol based on 1 mol of the oxide of titanium,
by (ii) heat treating a mixture of titanium carbide, titanium oxide and titanium nitride in a nitrogen atmosphere, wherein the quantity of titanium carbide is in the range of 0.1 to 500 mol and the quantity of titanium oxide is in the range of 0.01 to 50 mol, based on 1 mol of titanium nitride, or
by (iii) heat treating a mixture of titanium carbide and titanium nitride in a nitrogen atmosphere, wherein the quantity of titanium nitride is in the range of 0.01 to 10 mol based on 1 mol of titanium carbide; and
(b) a step of heat treating the titanium carbonitride in an inert gas containing oxygen gas and hydrogen gas to obtain an oxycarbonitride of titanium, wherein the oxygen gas concentration in the step is in the range of 0.5 to 5% by volume.

4. The preparation process as claimed in claim 3, wherein the temperature of the heat treatment in the step (b) is in the range of 400 to 1400°C.

5. The preparation process as claimed in claim 3 or 4, wherein the hydrogen gas concentration in the inert gas in the step (b) is in the range of 0.2 to 20% by volume.

6. A fuel cell having the membrane electrode assembly as claimed in claim 1 or 2.

7. A solid polymer type fuel cell having the membrane electrode assembly as claimed in claim 1 or 2.

## Patentansprüche

1. Membranelektrodenaufbau mit einer Kathode, einer Anode und einer zwischen der Kathode und der Anode angeordneten elektrolytischen Membran,
wobei die Kathode und/oder die Anode eine Elektrode ist, die eine Katalysatorschicht, die einen Oxycarbonitrid von Titan enthaltenden Pulverkatalysator umfasst, und
eine poröse Trägerschicht aufweist,
wobei das Oxycarbonitrid von Titan durch die Zusammensetzungsformel TiCₓN_{y}O_{z} dargestellt ist (worin x, y und z ein Verhältnis der Atomzahlen darstellen und die Zahlen die Bedingungen 0<x≤1,0, 0<y≤1,0, 0,1≤z<2,0, 1,0<x+y+z≤2,0 und 2,0≤4x+3y+2z erfüllen).

2. Membranelektrodenaufbau nach Anspruch 1, wobei die Katalysatorschicht außerdem Elektronen leitende Teilchen enthält.

3. Verfahren zum Herstellen eines Membranelektrodenaufbaus nach Anspruch 1 oder 2, umfassend
(a) eine Stufe, in der Titancarbonitrid hergestellt wird
durch (i) Hitzebehandlung eines Gemisches eines Oxids von Titan und Kohlenstoff in einer Stickstoffatmosphäre, wobei, wenn das Oxid von Titan ein Oxid von zweiwertigem Titan ist, die Menge des Kohlenstoffs im Bereich von 1 bis 3 mol im Bezug auf 1 mol des Oxids von Titan ist, und
wenn das Oxid von Titan ein Oxid von vierwertigem Titan ist, die Menge des Kohlenstoffs im Bereich von 2 bis 4 mol im Bezug auf 1 mol des Oxids von Titan ist,
durch (ii) Hitzebehandlung eines Gemisches von Titancarbid, Titanoxid und Titannitrid in einer Stickstoffatmosphäre, wobei die Menge des Titancarbids im Bereich von 0,1 bis 500 mol ist und die Menge des Titanoxids im Bereich von 0,01 bis 50 mol im Bezug auf 1 mol Titannitrid ist, oder
durch (iii) Hitzebehandlung eines Gemisches von Titancarbid und Titannitrid in einer Stickstoffatmosphäre, wobei die Menge von Titannitrid im Bereich von 0,01 bis 10 mol im Bezug auf 1 mol Titancarbid ist; und
(b) eine Stufe, in der das Titancarbonitrid in einem Sauerstoffgas und Wasserstoffgas enthaltenden Inertgas hitzebehandelt wird, wobei ein Oxycarbontrid von Titan erhalten wird, wobei die Sauerstoffgaskonzentration in der Stufe im Bereich von 0,5 bis 5 Vol.-% ist.

4. Herstellungsverfahren nach Anspruch 3, wobei die Temperatur der Hitzebehandlung in Stufe (b) im Bereich von 400 bis 1400°C ist.

5. Herstellungsverfahren nach Anspruch 3 oder 4, wobei Wasserstoffgaskonzentration in dem Inertgas in der Stufe (b) im Bereich von 0,2 bis 20 Vol.-% ist.

6. Brennstoffzelle, die einen Membranelektrodenaufbau nach Anspruch 1 oder 2 aufweist.

7. Brennstoffzelle vom Festpolymertyp, die einen Membranelektrodenaufbau nach Anspruch 1 oder 2 aufweist.

## Revendications

1. Ensemble membrane-éléctrolyte comportant une cathode, une anode et une membrane électrolytique disposée entre la cathode et l'anode,
dans lequel la cathode et/ou l'anode est une électrode comportant une couche de catalyseur contenant un catalyseur en poudre comprenant un oxycarbonitrure de titane et
une couche de support poreuse, et
dans lequel l'oxycarbonitrure de titane est représenté par la formule de composition TiCₓN_{y}O_{z} (dans laquelle x, y et z représentent un rapport des nombres d'atomes et sont des nombres respectant les conditions 0 < x ≤ 1,0, 0 < y ≤ 1,0, 0,1 ≤ z < 2,0, 1,0 < x + y + z ≤ 2,0 et 2,0 ≤ 4x + 3y + 2z).

2. Ensemble membrane-éléctrolyte selon la revendication 1, dans lequel la couche de catalyseur contient en outre des particules conduisant les électrons.

3. Procédé de préparation de l'ensemble membrane-éléctrolyte selon la revendication 1 ou 2, qui comprend
(a) une étape de préparation de carbonitrure de titane par (i) traitement thermique d'un mélange d'un oxyde de titane et de carbone dans une atmosphère d'azote, dans lequel
lorsque l'oxyde de titane est un oxyde de titane divalent, la quantité de carbone se situe dans la plage de 1 à 3 mol sur la base de 1 mol de l'oxyde de titane et
lorsque l'oxyde de titane est un oxyde de titane tétravalent, la quantité de carbone se situe dans la plage de 2 à 4 mol sur la base de 1 mol de l'oxyde de titane,
par (ii) traitement thermique d'un mélange de carbure de titane, d'oxyde de titane et de nitrure de titane dans une atmosphère d'azote, dans lequel la quantité de carbure de titane se situe dans la plage de 0,1 à 500 mol et la quantité d'oxyde de titane se situe dans la plage de 0,01 à 50 mol, sur la base de 1 mol de nitrure de titane, ou
par (iii) traitement thermique d'un mélange de carbure de titane et de nitrure de titane dans une atmosphère d'azote, dans lequel la quantité de nitrure de titane se situe dans la plage de 0,01 à 10 mol sur la base de 1 mol de carbure de titane ; et
(b) une étape de traitement thermique du carbonitrure de titane dans un gaz inerte contenant un gaz d'oxygène et un gaz d'hydrogène pour obtenir un oxycarbonitrure de titane, la concentration du gaz d'oxygène au cours de l'étape se situant dans la plage de 0,5 à 5 % en volume.

4. Procédé de préparation selon la revendication 3, dans lequel la température du traitement thermique au cours de l'étape (b) se situe dans la plage de 400 à 1 400 °C.

5. Procédé de préparation selon la revendication 3 ou 4, dans lequel la concentration du gaz d'hydrogène dans le gaz inerte au cours de l'étape (b) se situe dans la plage de 0,2 à 20 % en volume.

6. Pile à combustible comportant l'ensemble membrane-éléctrolyte selon la revendication 1 ou 2.

7. Pile à combustible de type polymère solide comportant l'ensemble membrane-éléctrolyte selon la revendication 1 ou 2.
